# FASCICULE DE BREVET EUROPEEN

(11) **EP 1 491 725 B1**
(45) Date de publication et mention de la délivrance du brevet: **12.10.2005**
(21) Numéro de dépôt: 04291010.9
(22) Date de dépôt: 15.04.2004
(51) Int. Cl.: F01D 17/16

(54) **Dispositif de guidage d'une aube à angle de calage variable**
Lagervorrichtung für eine verstellbare Schaufel
Bearing device for an adjustable vane

(30) Priorité: 26.06.2003 FR 0307707
(43) Date de publication de la demande: 29.12.2004
(73) Titulaire: SNECMA, 75015 Paris (FR)
(72) Inventeur: Debeneix, Pierre, 77930 Saint-Sauveur/Ecole (FR); Bromann, Alain, 77870 Vulaines/Seine (FR); Buffenoir, François, 91220 Bretigny-Sur-Orge (FR)
(74) Mandataire: Ramey, Daniel

(56) Documents cités:
- GB-A- 757 230
- US-A- 3 674 377

## Description

La présente invention concerne un dispositif de guidage d'une aube à angle de calage variable, telle notamment qu'une aube directrice d'entrée d'air dans un compresseur de turbomachine, par exemple de turboréacteur ou de turbopropulseur d'avion.

Les dispositifs de guidage connus permettent à des aubes de stator de turbomachine de pivoter autour de leur axe afin de redresser l'écoulement des gaz qui ont été déviés par des aubes de rotor. Le contrôle du redressement de l'écoulement des gaz, qui est effectué en fonction des différents régimes de la machine et des caractéristiques dynamiques des gaz, permet d'accroître les performances des turbomachines.

Dans la plupart des conceptions, et comme décrit dans les documents FR-A-2 743 846, FR-A- 2 814 206 et US-A- 5 215 434, ces aubes pivotantes sont guidées en rotation par des douilles en matière antifriction, par exemple en bronze fritté, fixées dans des alésages cylindriques usinés dans des bossages d'un carter formant le stator de la turbomachine. Le blocage axial des aubes pivotantes est réalisé par des rondelles de matière similaire à celle des douilles.

Ces guidages génèrent un couple résistant nécessitant des efforts importants pour la manoeuvre en rotation des aubes et ils ont une durée de vie insuffisante. On a proposé de les remplacer dans les documents US-A-3.674.377 et US-A- 2.778.377 par des roulements à billes, à rouleaux ou à aiguilles, les axes de rotation des rouleaux ou des aiguilles étant parallèles à l'axe de rotation de l'aube. Cependant et bien que les roulements utilisés dans ces guidages permettent de réduire le couple résistant s'exerçant à l'encontre de la rotation de l'aube, les solutions apportées ne donnent pas entière satisfaction. En effet, lorsque des efforts aérodynamiques, dus à l'écoulement des gaz dans la turbomachine, s'exercent sur les aubes pivotantes, les éléments roulants (billes, aiguilles ou rouleaux) des roulements de guidage de l'aube ne sont pas chargés de manière uniforme, c'est-à-dire que certains éléments roulants subissent des charges très importantes et d'autres éléments ne sont quasiment pas chargés. Les conséquences sont que l'usure des éléments roulants n'est pas uniformément répartie, les éléments roulants très chargés s'usant beaucoup plus rapidement que les éléments roulants non chargés ou peu chargés et provoquant par conséquent un vieillissement accéléré des roulements qu'il est nécessaire de surveiller et de changer régulièrement.

Un but de l'invention est d'éviter les inconvénients précités et d'apporter une solution techniquement simple au problème du guidage d'un pivot d'aube dans son support, grâce à un guidage fiable et sans frottement qui permet un entraînement en rotation de l'aube sans effort, évite une usure prématurée des éléments roulants et réduit la maintenance des moyens de guidage du pivot d'aube.

L'invention propose donc un dispositif de guidage d'une aube à angle de calage variable, en particulier dans un compresseur de turbomachine, l'aube comprenant un pivot formé par une queue axiale cylindrique montée dans un logement cylindrique d'un carter et guidée en rotation autour d'un axe dans ce logement par des paliers, caractérisé en ce que lesdits paliers sont des butées à rouleaux coniques, ces rouleaux ayant des axes de rotation qui sont sensiblement perpendiculaires à l'axe de rotation de l'aube.

Selon d'autres caractéristiques de l'invention, le dispositif de guidage comprend deux butées à rouleaux coniques, axialement espacées l'une de l'autre et dans chacune desquelles les axes de rotation des rouleaux sont dans un même plan sensiblement perpendiculaire à l'axe de rotation de l'aube.

Chaque butée à rouleaux comprend deux bagues annulaires entre lesquelles sont logés les rouleaux et qui sont chacune dans un plan sensiblement perpendiculaire à l'axe de rotation de l'aube.

Le dispositif de guidage comprend des moyens de serrage des rouleaux coniques de chaque butée à rouleaux entre les bagues de cette butée, la direction du serrage étant parallèle à l'axe de rotation de l'aube.

L'effort statique de serrage des rouleaux entre les bagues d'un roulement est supérieur aux efforts exercés sur ces rouleaux par les forces aérodynamiques agissant sur l'aube.

Les butées à rouleaux, dont les axes de rotation des rouleaux sont perpendiculaires à l'axe de rotation de l'aube, peuvent supporter des charges radiales élevées mais surtout des charges axiales très importantes contrairement aux roulements à aiguilles et à rouleaux, dont les axes des rouleaux et des aiguilles parallèles à l'axe de rotation de l'aube ne supportent que des charges axiales très faibles ou quasi-nulles. Ces caractéristiques du dispositif selon l'invention permettent d'exercer sur les butées à rouleaux, par exemple à l'aide d'un écrou de fixation que l'on vient serrer sur l'extrémité libre filetée de la queue axiale de l'aube, une force axiale importante, sans les détériorer. Du fait de la forme conique des rouleaux et des surfaces des bagues des butées en contact avec les rouleaux, la force axiale exercée par l'écrou sur les butées est répartie sur les rouleaux en efforts axiaux et radiaux de précharge. La force axiale exercée par l'écrou sur les butées est déterminée pour que les efforts de précharge exercés sur les rouleaux soient plus importants que les efforts induits sur les rouleaux par les forces aérodynamiques exercées sur l'aube. Par ce serrage axial de l'écrou sur les butées à rouleaux, les efforts induits lors du fonctionnement de la turbomachine sont répartis uniformément sur l'ensemble des rouleaux et ceci quelles que soient les variations en intensité et en direction des forces exercées sur l'aube par les gaz. Une conséquence directe est que l'usure au fil du temps, notamment lors des manoeuvres en rotation de l'aube, est uniformément répartie sur tous les rouleaux, ce qui permet d'augmenter considérablement la durée de vie des butées à rouleaux et de diminuer la fréquence des opérations de maintenance nécessaires pour remplacer ces butées. De plus, les butées à rouleaux utilisées sont de dimensions et de formes standard ne nécessitant aucune fabrication spéciale des bagues et sont proposées par la plupart des fabricants de roulements à des prix peu élevés.

L'utilisation des butées à rouleaux permet également d'obtenir un guidage du pivot d'aube dans son support et un blocage axial de l'aube par rapport à ce support qui sont sensiblement sans frottement et ne nécessitent que très peu d'efforts pour déplacer l'aube en rotation. Cette diminution des efforts permet d'utiliser des moyens d'entraînement de l'aube plus simples et moins coûteux que ceux utilisés dans la technique antérieure. Ces moyens d'entraînement peuvent par exemple comprendre des biellettes du type MIM ou des commandes à vérin unique.

Une autre caractéristique intéressante de l'invention est que les butées à rouleaux sont étanches, par exemple par utilisation de flasques annulaires d'étanchéité fixés entre les bagues des butées. En outre, selon l'invention, la butée la plus proche de l'aube est montée de façon étanche dans le logement du carter par appui de l'une de ses bagues sur une surface radiale de l'extrémité de l'aube et de l'autre de ses bagues sur une surface radiale d'un épaulement formé dans le logement de carter. Ces caractéristiques d'étanchéité permettent d'isoler simplement et efficacement le mécanisme interne de la turbomachine, comprenant notamment le rotor et l'aubage de stator, par rapport à l'environnement extérieur.

Selon encore d'autres caractéristiques de l'invention :
- une première butée est en appui par une de ses bagues sur l'extrémité de l'aube et par l'autre de ses bagues sur un épaulement du logement du carter, et l'autre butée est en appui par une de ses bagues sur un épaulement du logement du carter et par son autre bague sur un écrou de serrage vissé sur la queue axiale de l'aube ;
- les butées sont montées dans le logement du carter de part et d'autre d'une couronne formée en saillie à l'intérieur de ce logement, les surfaces radiales de la couronne formant les épaulements du logement du carter ;
- chaque butée comprend une bague annulaire centrée et fixée sur la queue axiale de l'aube, et une bague annulaire centrée et fixée dans le logement du carter ;
- les bagues centrées dans le logement du carter sont celles situées au plus près l'une de l'autre, et les bagues centrées sur la queue axiale d'aube sont celles les plus éloignées l'une de l'autre ;
- les bagues centrées dans le carter sont fixes en rotation, et les bagues centrées sur la queue axiale de l'aube sont tournantes.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe d'un mode de réalisation du dispositif selon l'invention ;
- la figure 2 est une vue à plus grande échelle d'une partie du dispositif représenté en figure 1.

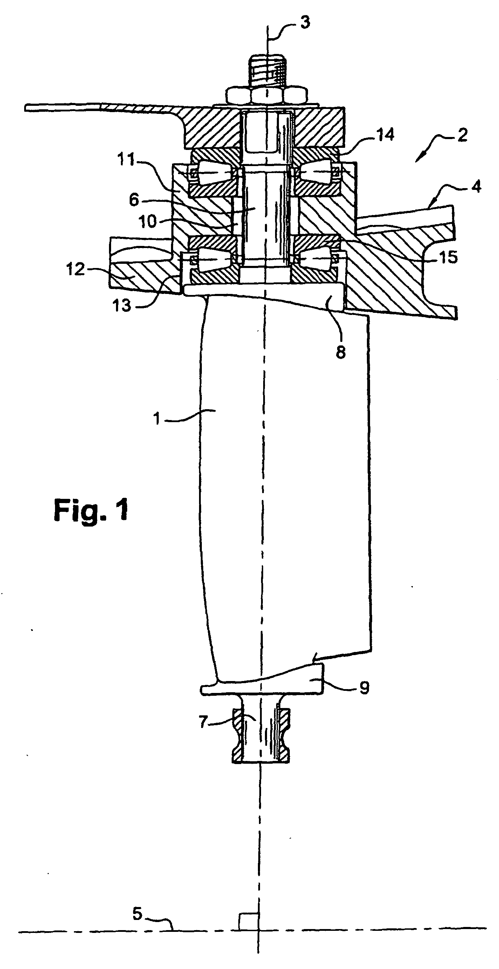

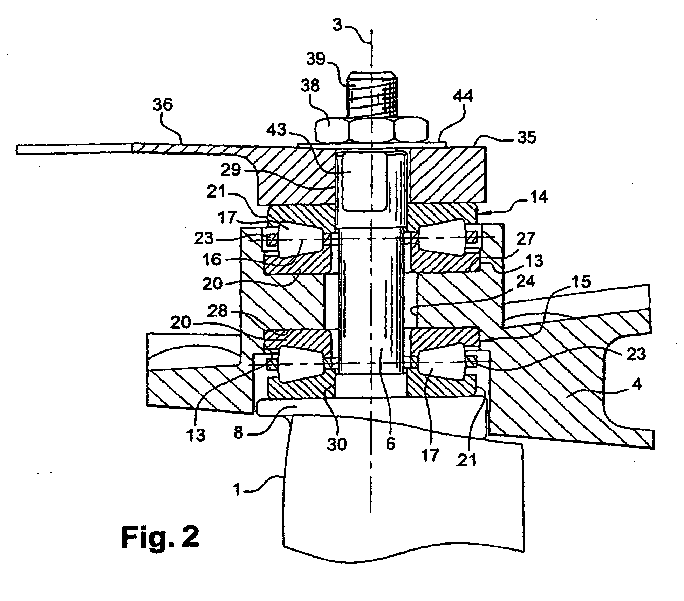

Les figures 1 et 2 représentent une aube 1 à calage angulaire variable dans un compresseur 2 de turbomachine, cette aube pouvant pivoter autour de son axe 3 par rapport au stator 4 de la turbomachine. L'axe de l'aube 3 est perpendiculaire ou non à l'axe de rotation 5 du rotor (non représenté) de la turbomachine. Deux pivots cylindriques 6, 7 s'étendent depuis les extrémités 8, 9 de l'aube 1 le long de son axe de rotation 3. Le pivot supérieur est formé par une queue axiale cylindrique 6 de l'aube 1 et est monté dans un logement cylindrique 10 formé dans un bossage 11 du stator 4 et le pivot inférieur 7 s'étendant depuis l'autre extrémité d'aube 9 est monté dans un logement cylindrique d'un support (non représenté) du côté du rotor de la turbomachine. La queue axiale 6 est guidée dans le logement cylindrique 10 du stator 4 par un dispositif de guidage selon l'invention. Le dispositif de guidage du pivot inférieur 7, qui n'est pas toujours requis pour permettre la rotation de l'aube 1 et qui peut être un dispositif connu dans la technique antérieure, par exemple tel que décrit dans le brevet US-A- 2.778.564, n'est pas représenté en figure 1.

Le bossage 11 dans lequel est formé le logement cylindrique 10 s'étend perpendiculairement ou non à l'axe de rotation 5 du rotor de la turbomachine sur la surface radialement externe du stator 4. Le logement cylindrique 10 comprend à ses extrémités deux parties cylindriques 13 coaxiales de section circulaire séparées par une couronne 24 formée en saillie à l'intérieur du logement 10. La queue axiale 6 est centrée et guidée en rotation dans le logement cylindrique 10 par deux butées à rouleaux coniques 14, 15 dont les caractéristiques dimensionnelles et mécaniques sont identiques. Les axes 16 des rouleaux 17 de chaque butée 14, 15 sont dans un même plan qui est perpendiculaire à l'axe de rotation 3 de l'aube 1. Chaque butée à rouleaux 14, 15 est montée dans une partie cylindrique 13 d'extrémité de part et d'autre de la couronne 24. Ces butées à rouleaux 14, 15 de type standard comportent chacune deux bagues annulaires 20, 21 coaxiales entre lesquelles sont logés les rouleaux 17 et qui sont chacune dans un plan perpendiculaire à l'axe de rotation 3 de l'aube 1. Les bagues 20, 21 de chaque butée à rouleaux 14, 15 forment des chemins annulaires pour guider les rouleaux 17 lors de leurs déplacements lorsque l'aube 1 est entraînée en rotation. Les rouleaux 17, disposés en cercle entre les bagues 20, 21 de chaque butée 14, 15, sont maintenus régulièrement espacés à l'aide d'une cage à rouleaux 23.

La couronne 24 forme autour de l'axe de rotation 3 de l'aube 1 une saillie sur la paroi interne du logement cylindrique 10. Les butées à rouleaux 14, 15 sont montées de part et d'autre de la couronne 24 et chacune d'elles est en appui axial, par l'une 20 de ses bagues, sur l'une des surfaces radiales 27, 28 de la couronne 24. Chaque butée à rouleaux 14, 15 est centrée dans la partie cylindrique 13 correspondante par sa bague 20 en appui sur la couronne 24.

Chaque butée à rouleaux 14, 15 est également centrée sur une portée cylindrique 29, 30 de la queue axiale 6 de l'aube au moyen de sa bague 21 la plus éloignée de la couronne. Les deux portées cylindriques 29, 30 nécessaires au centrage des butées sur la queue axiale 6 sont de même diamètre et sont reliées par une partie cylindrique de la queue axiale ayant un diamètre inférieur au diamètre des deux portées cylindriques.

Les bagues 20 centrées dans les parties 13 du logement cylindrique 10 sont fixes en rotation, et les bagues 21 centrées sur la queue axiale 6 de l'aube sont tournantes et solidaires en rotation de la queue axiale 6. La fixation des bagues 20 centrées dans les parties 13 du logement cylindrique 10 peut être réalisée par un ajustement serré et/ou par collage.

La butée à rouleaux 15 située du côté de l'aube 1 est en appui axial, par sa bague 21 centrée sur la queue 6, sur l'extrémité d'aube 8. La portée cylindrique 30, permettant de centrer sur la queue axiale 6 la butée à rouleaux 15, s'étend depuis l'extrémité d'aube sur une hauteur correspondant à celle de la bague 21.

La butée à rouleaux 14 située du côté de l'extrémité libre de la queue axiale 6, est en appui axial par sa bague 21 sur une partie annulaire 35 d'un levier 36 ou d'une bielle d'entraînement en rotation de l'aube, la partie annulaire 35 étant engagée sur la queue axiale 6.

La partie annulaire 35 du levier 36 ou de la bielle est serrée axialement, directement ou par l'intermédiaire d'une rondelle 44, sur la butée 14 par un écrou 38 vissé sur une extrémité filetée 39 de la queue axiale 6.

La partie annulaire 35 du levier 36 a une surface cylindrique interne formée avec au moins un méplat qui coopère avec un méplat 43 correspondant de la partie de la queue axiale 6 autour de laquelle elle est engagée pour solidariser en rotation le levier 36 et par rapport à l'aube 1.

Dans le mode de réalisation représenté, chaque butée à rouleaux 14, 15 est munie de deux flasques d'étanchéité annulaire (non représentés) fixés entre ses deux bagues 20, 21 et est étanche.

Dans un tel assemblage, la disposition d'une part de la couronne 24 entre les deux butées à rouleaux 14, 15 et d'autre part des deux butées à rouleaux 14, 15 entre l'extrémité d'aube 8 et l'écrou de serrage 38 permet d'immobiliser en translation la queue axiale 6, et par conséquent l'aube 1, par rapport au carter 4 de la turbomachine.

Lors de l'assemblage du dispositif de guidage, une dernière étape de l'assemblage consiste à serrer l'écrou de fixation 38 autour de la queue axiale 7 avec un couple déterminé pour immobiliser en translation l'aube 1 par rapport au stator 4 mais également pour appliquer une précharge sur les rouleaux 17 des butées 14, 15. Le serrage de l'écrou 38 génère des efforts de compression qui s'appliquent axialement sur chaque butée à rouleaux 14, 15 pour serrer les rouleaux 17 entre les bagues 20, 21 de ces butées. La butée à rouleaux 14 située du côté de l'extrémité libre de la queue axiale 6 est alors serrée entre la partie annulaire 35 du levier 36 et la couronne 24 et la butée à rouleaux 15 située du côté de l'aube 1 est serrée entre l'extrémité d'aube 8 et la couronne 24.

Du fait de la forme conique des rouleaux 17 et des surfaces des bagues 20, 21 en contact avec les rouleaux 17, les efforts de compression exercés sur chaque butée à rouleaux 14, 15 se répartissent sur les rouleaux 17 en efforts axiaux et radiaux de précharge. Le couple de serrage appliqué à l'écrou 38 vissé sur la queue axiale 6 est déterminé pour que les efforts de précharge exercés sur les rouleaux 17 soient nettement supérieurs aux charges induites sur les rouleaux 17 par les efforts aérodynamiques exercés sur l'aube 1, qui résultent de l'écoulement des gaz dans la turbomachine. Du fait de cette précharge, les charges supportées par les rouleaux 17 lors du fonctionnement de la turbomachine sont uniformément réparties en permanence sur l'ensemble des rouleaux 17 quelles que soient les variations en intensité et en direction des efforts exercés sur l'aube 1 par les gaz.

Dans une variante de réalisation de l'invention, les deux butées à rouleaux 14, 15 ont des dimensions et/ou des caractéristiques mécaniques différentes.

## Revendications

1. Dispositif de guidage d'une aube à angle de calage variable, en particulier dans un compresseur de turbomachine, l'aube comprenant un pivot formé par une queue axiale (6) cylindrique montée dans un logement cylindrique (10) d'un carter et guidée en rotation autour d'un axe dans ce logement par des paliers, **caractérisé en ce que** lesdits paliers sont des butées (14,15) à rouleaux coniques (17), les axes de ces rouleaux étant sensiblement perpendiculaires à l'axe de rotation de l'aube.

2. Dispositif de guidage selon la revendication 1, **caractérisé en ce qu'**il comprend deux butées (14,15) à rouleaux coniques, axialement espacées l'une de l'autre et dans chacune desquelles les axes de rotation des rouleaux (17) sont dans un même plan sensiblement perpendiculaire à l'axe de rotation (3) de l'aube.

3. Dispositif de guidage selon la revendication 1 ou 2, **caractérisé en ce que** chaque butée à rouleaux comprend deux bagues annulaires (20,21) entre lesquelles sont logés les rouleaux (17) et qui sont chacune dans un plan sensiblement perpendiculaire à l'axe de rotation (3) de l'aube.

4. Dispositif de guidage selon la revendication 3, **caractérisé en ce qu'**il comprend des moyens (38) de serrage des rouleaux coniques (17) de chaque butée à rouleaux entre les bagues (20,21) de cette butée, la direction du serrage étant parallèle à l'axe de rotation (3) de l'aube.

5. Dispositif de guidage selon la revendication 4, **caractérisé en ce que** l'effort statique de serrage des rouleaux (17) des butées (14,15) est supérieur aux efforts exercés sur ces rouleaux par les forces aérodynamiques agissant sur l'aube.

6. Dispositif de guidage selon l'une des revendications 1 à 5, **caractérisé en ce qu'**une première butée (15) est en appui par l'une de ses bagues sur une extrémité d'aube (8) et par l'autre de ses bagues sur un épaulement du logement (10) du carter, et l'autre butée à rouleaux (14) est en appui par l'une de ses bagues sur un épaulement du logement (10) du carter et par son autre bague sur un écrou de serrage (38) vissé sur la queue axiale (6) de l'aube.

7. Dispositif de guidage selon la revendication 6, **caractérisé en ce que** les butées (14,15) sont montées dans le logement (10) du carter de part et d'autre d'une couronne (24) formée en saillie à l'intérieur de ce logement, les surfaces radiales de la couronne (24) formant les épaulements du logement du carter.

8. Dispositif de guidage selon la revendication 6 ou 7, **caractérisé en ce que** la première butée à rouleaux (15) est montée de façon étanche dans le logement (10) du carter par appui de ses bagues sur des surfaces radiales de l'extrémité d'aube (8) et d'un épaulement du logement de carter, respectivement.

9. Dispositif de guidage selon l'une des revendications 1 à 8, **caractérisé en ce que** chaque butée à rouleaux (14,15) comprend une bague annulaire (21) centrée et fixée sur la queue axiale (6) de l'aube, et une bague annulaire (20) centrée et fixée dans le logement (10) du carter.

10. Dispositif de guidage selon la revendication 9, **caractérisé en ce que** les bagues (20) des butées à rouleaux centrées dans le logement (10) du carter sont celles situées au plus près l'une de l'autre, et les bagues (21) des deux butées à rouleaux centrées sur la queue axiale (6) de l'aube sont celles les plus éloignées l'une de l'autre.

11. Dispositif de guidage selon la revendication 9 ou 10, **caractérisé en ce que** les bagues (20) centrées dans le carter sont fixes en rotation, et les bagues (21) centrées sur la queue axiale (6) sont tournantes.

12. Dispositif de guidage selon l'une des revendications 1 à 11, **caractérisé en ce que** les butées à rouleaux (14,15) sont étanches.

## Patentansprüche

1. Führungsvorrichtung einer im Winkel verstellbaren Schaufel, insbesondere in einem Turbomaschinenkompressor, wobei die Schaufel einen Drehzapfen aufweist, der durch einen zylindrischen axialen Schaft (6) gebildet ist, der in einer zylindrischen Aufnahme (10) eines Gehäuses angeordnet ist und in dieser Aufnahme über Lager um eine Achse drehbar geführt wird, **dadurch gekennzeichnet, daß** die Lager Widerlager (14,15) mit Kegelrollen (17) sind, wobei die Achsen dieser Rollen im wesentlichen senkrecht zur Drehachse der Schaufel sind.

2. Führungsvorrichtung nach Anspruch 1, **dadurch gekennzeichnet, daß** sie zwei Widerlager (14,15) mit Kegelrollen aufweist, welche axial voneinander beabstandet sind und in welchen jeweils die Drehachsen der Rollen (17) in einer gleichen Ebene sind, die im wesentlichen senkrecht zur Drehachse (3) der Schaufel ist.

3. Führungsvorrichtung nach Anspruch 1 oder 2, **dadurch gekennzeichnet, daß** jedes Rollen-Widerlager zwei Ringe (20,21) aufweist, zwischen denen die Rollen (17) eingesetzt sind und die jeweils in einer Ebene sind, die im wesentlichen senkrecht zur Drehachse (3) der Schaufel ist.

4. Führungsvorrichtung nach Anspruch 3, **dadurch gekennzeichnet, daß** sie Einrichtungen (38) zum Einspannen der Kegelrollen (17) jedes Rollen-Widerlagers zwischen den Ringen (20,21) dieses Lagers aufweist, wobei die Richtung der Einspannung parallel zur Drehachse (3) der Schaufel ist.

5. Führungsvorrichtung nach Anspruch 4, **dadurch gekennzeichnet, daß** die statische Belastung der Einspannung der Rollen (17) der Widerlager (14,15) höher ist als die Belastungen, die von den aerodynamischen Kräften, die auf die Schaufel wirken, auf diese Rollen ausgeübt werden.

6. Führungsvorrichtung nach einem der Ansprüche 1 bis 5, **dadurch gekennzeichnet, daß** ein erstes Widerlager (15) über einen seiner Ringe an einem Schaufelende (8) aufliegt und über den anderen seiner Ringe auf einer Schulter der Aufnahme (10) des Gehäuses aufliegt und das andere Rollenlager (14) über einen seiner Ringe auf einer Schulter der Aufnahme (10) des Gehäuses aufliegt und über seinen anderen Ring auf einer Stellmutter (38) aufliegt, die an den axialen Schaft (6) der Schaufel geschraubt ist.

7. Führungsvorrichtung nach Anspruch 6, **dadurch gekennzeichnet, daß** die Widerlager (14,15) in die Aufnahme (10) des Gehäuses beiderseits eines ins Innere dieser Aufnahme vorspringenden Kranzes (24) eingebaut sind, wobei die radialen Oberflächen des Kranzes (24) die Schultern der Aufnahme des Gehäuses bilden.

8. Führungsvorrichtung nach Anspruch 6 oder 7, **dadurch gekennzeichnet, daß** das erste Rollen-Widerlager (15) durch Auflage seiner Ringe auf den radialen Oberflächen des Schaufelendes (8) bzw. auf einer Schulter der Aufnahme des Gehäuses dicht in die Aufnahme (10) des Gehäuses eingebaut ist.

9. Führungsvorrichtung nach einem der Ansprüche 1 bis 8, **dadurch gekennzeichnet, daß** jedes Rollen-Widerlager (14,15) einen an dem axialen Schaft (6) der Schaufel zentrierten und befestigten Ring (21) und einen in der Aufnahme (10) des Gehäuses zentrierten und befestigten Ring (20) aufweist.

10. Führungsvorrichtung nach Anspruch 9, **dadurch gekennzeichnet, daß** die in der Aufnahme (10) des Gehäuses zentrierten Ringe (20) der Rollen-Widerlager diejenigen sind, die am nächsten nebeneinander angeordnet sind, und die an dem axialen Schaft (6) der Schaufel zentrierten Ringe (21) der zwei Rollenlager diejenigen sind, die am weitesten voneinander entfernt angeordnet sind.

11. Führungsvorrichtung nach Anspruch 9 oder 10, **dadurch gekennzeichnet, daß** die in dem Gehäuse zentrierten Ringe (20) nichtdrehbar sind und die an dem axialen Schaft (6) zentrierten Ringe (21) drehbar sind.

12. Führungsvorrichtung nach einem der Ansprüche 1 bis 11, **dadurch gekennzeichnet, daß** die Rollenlager (14,15) dicht sind.

## Claims

1. A guide device for guiding a variable-pitch blade, in particular in a turbomachine compressor, the blade having a pivot formed by a cylindrical axial shank (6) mounted in a cylindrical housing (10) of a casing and pivotally guided about an axis in said housing by bearings, the device being **characterized in that** said bearings are abutment bearings (14, 15) with conical rollers (17), the axes of the rollers being substantially perpendicular to the pivot axis of the blade.

2. A guide device according to claim 1, **characterized in that** it comprises two axially spaced apart abutment bearings (14, 15) with conical rollers, in each of which bearings the axes of rotation of the rollers (17) lie in a common plane substantially perpendicular to the pivot axis (3) of the blade.

3. A guide device according to claim 1 or claim 2, **characterized in that** each roller abutment bearing comprises two annular rings (20, 21) with the rollers (17) housed between them, each of which rings occupies a plane substantially perpendicular to the pivot axis (3) of the blade.

4. A guide device according to claim 3, **characterized in that** it includes means (38) for clamping the conical rollers (17) in each roller abutment bearing between the rings (20, 21) of the abutment bearing, the clamping direction being parallel to the pivot axis (3) of the blade.

5. A guide device according to claim 4, **characterized in that** the static clamping force on the rollers (17) of the abutment bearings (14, 15) is greater than the forces exerted on said rollers by the aerodynamic forces acting on the blade.

6. A guide device according to any one of claims 1 to 5, **characterized in that** a first abutment bearing (15) bears via one of its rings against one end (8) of the blade and via its other ring against a shoulder in the housing (10) in the casing, and the other roller abutment bearing (14) has one of its rings bearing against a shoulder in the housing (10) in the casing, and has its other ring bearing against a clamping nut (38) screwed onto the axial shank (6) of the blade.

7. A guide device according to claim 6, **characterized in that** the abutment bearings (14, 15) are mounted in the housing (10) of the casing on either side of a collar (24) that projects into the inside of the housing, the radial surfaces of the collar (24) forming the shoulders in the housing in the casing.

8. A guide device according to claim 6 or claim 7, **characterized in that** the first roller abutment bearing (15) is mounted in leaktight manner in the housing (10) of the casing, bearing via its rings against respective radial surfaces at the end (8) of the blade and on a shoulder in the housing in the casing.

9. A guide device according to any one of claims 1 to 8, **characterized in that** each roller abutment bearing (14, 15) includes an annular ring (21) centered and fixed on the axial shank (6) of the blade, and an annular ring (20) centered and fixed in the housing (10) of the casing.

10. A guide device according to claim 9, **characterized in that** the rings (20) of the roller abutment bearings that are centered in the housing (10) of the casing are the rings that are situated closer together, while the rings (21) of the two roller abutment bearings that are centered on the axial shank (6) of the blade are those that are further apart from each other.

11. A guide device according to claim 9 or claim 10, **characterized in that** the rings (20) centered in the casing are prevented from pivoting, and the rings (21) centered on the axial shank (6) are pivotally mounted.

12. A guide device according to any one of claims 1 to 11, **characterized in that** the roller abutment bearings (14, 15) are leaktight.
